(19) **Europäisches Patentamt**
**European Patent Office**
**Office européen des brevets**

(11)  **EP 2 397 829 B1**

(12)  **EUROPEAN PATENT SPECIFICATION**

(45) Date of publication and mention
of the grant of the patent:
**27.04.2016  Bulletin 2016/17**

(51) Int Cl.:
**G01L 1/12** *(2006.01)*  **G01L 3/10** *(2006.01)*

(21) Application number: **10166703.8**

(22) Date of filing: **21.06.2010**

(54) **Dynamic signal torque sensor**

Dynamischer Signal-Drehmomentsensor.

Capteur de couple en signal dynamique.

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(43) Date of publication of application:
**21.12.2011  Bulletin 2011/51**

(73) Proprietor: **PolyResearch AG
7000 Chur (CH)**

(72) Inventor: **May, Lutz
82335, Berg (DE)**

(74) Representative: **Müller Hoffmann & Partner
Patentanwälte mbB
St.-Martin-Strasse 58
81541 München (DE)**

(56) References cited:
**US-A- 3 311 818      US-A- 4 697 459
US-A- 4 979 399      US-A1- 2006 086 191**

## Description

## Background of the Invention

The present invention relates to a magnetic based force measuring sensor and a magnetic based force measuring method allowing force measuring without the need of pre-processing the sensing object.

## Field of the Invention

Force measuring is important for many industrial applications, in particular for arrangements being dynamically impacted by a force. Applied forces may be pressuring forces as well as moments like torque and bending impact. An exemplary application for torque is a shaft for a vehicle being arranged between a motor and e.g. a wheel. For determining a torque in the shaft, either a particular element needs to be mounted to the shaft, or the shaft needs to be pre-processed, e.g. magnetized. Mounting elements to a shaft may influence the movement of the shaft, pre-processing may be difficult when the shaft is not accessible or cannot me dismounted for pre-processing.

US 3,311,818 shows an apparatus for non-contact ascertaining of substantially unidimension strain in a magnetic sample having first means for producing a magnetic flux in a first direction and second means for sensing magnetic flux characteristic in said magnetic sample.

## Summary of the Invention

It is an object of the present Invention to provide a magnetic principle based mechanical force sensing technology that requires no pre-processing of the sensing object, e.g. a shaft.

The object is solved by the subject matter of the independent claims, further embodiments are incorporated in the dependent claims.

According to an embodiment of the invention there is provided a force measuring sensor comprising a magnetic field generating unit, a magnetic field sensing unit, and an magnetic field coupling element, wherein the inductive coupling element couples the magnetic field generating unit and the magnetic field sensitive unit, wherein the magnetic field coupling element comprises a force input section and a force output section, wherein the magnetic field coupling element comprises a material section between the force input section and the force output section, the material section having a permeability depending on a force impact.

The key difference of the here described between magnetostriction based mechanical force sensing systems is that there is no requirement of pre-shaft processing. In particular, there is no need for covering the shaft with a vaporization layer, a foil, or any other additional layer. In other words, the ferromagnetic shaft can be used as test object or magnetic field coupling element as it is, or as it is delivered by the customer. The material section does not have to be a particularly designed section, but is understood as e.g. a shaft section between the force input section and a force output section. The material of the material section may be in a condition as supplied by the customer, i.e. without a special treatment. Meaning that the new sensing technology does not rely on a magnetic field that has been permanently stored in the sensing object (like the power transmission shaft). It should be noted that as the magnetic field coupling element an already available object may be used, e.g. an already available shaft. Thus, the magnetic field coupling element does not have to be included in the force measuring sensor, when being distributed. The changed permeability may result from a morphology changing of the material section, but also from a deformation leading to different dimensions of the material section. For the magnetization generation a pulse may be used, in particular a pulse in positive direction and a subsequent pulse in negative direction. The pulse should be shorter than a duration during which a permanent magnetization of the test object is expected. A frequency of 200Hz for the pulse repetition works well at e.g. 150mA and 60 windings for a generator coil.

According to a further embodiment of the invention there is provided a force measuring sensor, wherein the magnetic field generation unit comprises a first magnetic field generation element and a second magnetic field generation element.

Thus, the generated magnetic field may be more homogeneous. Further, in particular operating modes, a noise reduction and error detection may be established when comparing the results with respect to the different generation elements.

According to a further embodiment of the invention there is provided a force measuring sensor, wherein the first magnetic field generation element generates a magnetic field in a first direction and the second magnetic field generation element generates a magnetic field in a second direction, wherein the first generating direction and the second generating direction are different from each other.

Thus, different aspects of the applied force may be determined, e.g. a direction of the force, a bending or a torque may be determined. Also force, bending and torque may be distinguished when measuring the impact.

According to a further embodiment of the invention there is provided a force measuring sensor, wherein the first generating direction and the second generating direction are substantially anti parallel.

Thus, the force measuring sensor may be made more sensitive. When applying no force or torque, the resulting magnetic field may be zero, but when applying a torque the resulting magnetic field generated by a flux in the coupling element may have a higher amount as the applied force may result in an asymmetry of the coupling element.

According to a further embodiment of the invention there is provided a force measuring sensor, wherein the magnetic field sensing unit is positioned between the first magnetic field generation element and the second magnetic field generation element.

Thus, an influence of environmental aspects may be reduced, the generated field may be made more homogeneous and a compensation of errors or noise may be established.

According to a further embodiment of the invention there is provided a force measuring sensor, wherein the magnetic field sensitive unit comprises a first magnetic field sensing element and a second magnetic field sensing element.

Thus, different additional aspects of the applied force may be determined, e.g. the direction of the force, a bending moment or a torque.

According to a further embodiment of the invention there is provided a force measuring sensor, wherein the first magnetic field sensing element has a main sensing characteristic in a first sensing direction, and the second magnetic field sensing element has a main sensing characteristic in a second sensing direction, wherein the first sensing direction and the second sensing direction are different from each other.

Thus, additional force aspects may be determined. The force vector may be determined.

According to a further embodiment of the invention there is provided a force measuring sensor, wherein the first sensing direction and the second sensing direction are substantially orthogonal to each other.

Thus, an improved sensitivity may be established, in particular for both aspects of a force vector.

According to a further embodiment of the invention there is provided a force measuring sensor, wherein the magnetic field generating unit is positioned between the first magnetic field sensing element and the second magnetic field sensing element.

Thus, the generating impact to the first and second sensing element may be maintained identical.

According to a further embodiment of the invention there is provided a force measuring sensor, wherein at least one of the magnetic field generating unit and/or the magnetic field sensing unit comprises an inductance.

Thus, a simple and efficient element may be provided. However, it should be noted that also other magnetically sensitive devices may be used, as for example a hall detector or the like, and other magnetic generation devices may be used as for example permanent magnets. When using inductances or coils for both, the generation and the sensing, very simple devices are possible. For example, the windings may be wound on a common bobbin. The generating coil and the sensing coil may be wound concentrically.

According to a further embodiment of the invention there is provided a force measuring sensor, wherein the inductance is a coil wound around the magnetic field coupling element.

Thus, an efficient coupling may be established. However, the inductances may also be provided beside a coupling element, for example, when it is not possible to put the coupling element through the opening of the coil.

According to a further embodiment of the invention there is provided a force measuring sensor, further comprising a current source, wherein the current source is coupled to the magnetic field generating unit.

Thus, a magnetic field generation can be established by a current source, e.g. a high precision current source or a temperature stable current source.

According to a further embodiment of the invention there is provided a force measuring sensor, wherein the current source is a direct current source.

Thus, the impact of the current source to the di/dt, which is responsible for generating a current in the sensing inductance, can be eliminated. Then the di/dt will be influences more by the coupling element when applying a force.

According to a further embodiment of the invention there is provided a force measuring sensor, further comprising an evaluation unit, wherein the evaluation unit is coupled to the magnetic field sensing unit.

Thus, an evaluation of the measured dimensions may be carried out by the force measuring device itself

According to a further embodiment of the invention there is provided a force measuring sensor, wherein the evaluation unit comprises a data base serving as a base for allocating a sensed magnetic field to a respective applied force.

Thus, the force measuring device may be capable of determining the applied force automatically. Also a self calibrating process may be established.

According to a further embodiment of the invention there is provided a force measuring method, the force measuring method, comprising generating a magnetic field, such that a flux is coupled to an inductive coupling element; sensing a magnetic field generated by the flux in the inductive coupling element, applying a force to the inductive coupling element between a force input section and a force output section of the magnetic coupling element, and determining the force by sensing a variation of the magnetic field generated by the flux in the inductive coupling element.

Even if not explicitly mentioned, it should be noted that the above features may also be combined. The combination of particular features may lead to synergetic effects extending over the sum of the single features.

**Brief description of the drawings**

In the following for further illustration and to provide a better understanding of the present invention exemplary embodiments are described in more details with reference to the enclosed drawings, in which

Fig. 1 illustrates a general explanation of the invention,

Fig. 2 illustrates a principle build up of the signal processing,

Fig. 3 illustrates a principle build up of the circuit,

Fig. 4 illustrates a test object with flux lines with no torque applied,

Fig. 5 illustrates a respective test object with flux lines with positive torque and negative torque, respectively, applied,

Fig. 6 illustrates magnetic flux lines induced into a surface of the test object depending on the torque applied,

Fig. 7 illustrates two major design options, of generator and sensing element arrangement,

Fig. 8 illustrates a test object having a single generator coil and a single sensor or sensing coil side by side wound around the test object,

Fig. 9 illustrates a test object having a single generator coil and a single sensor or sensing coil concentrically or interleaved wound around the test object,

Fig. 10 illustrates a test object having two counter orientated generator coils and a sensor or sensing coils side by side wound around the test object,

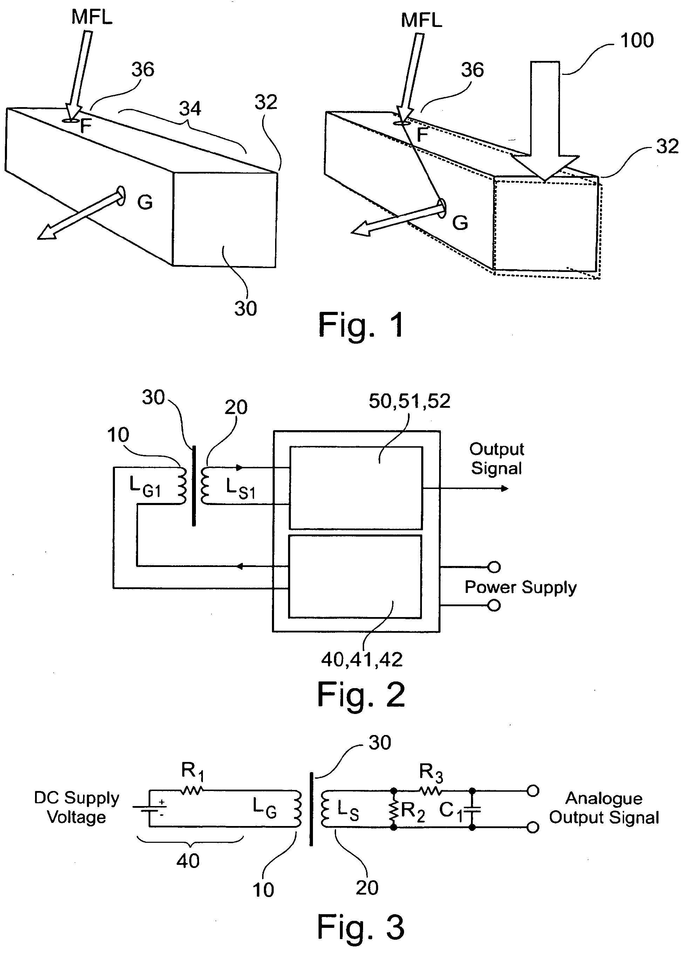

Fig. 1 1 illustrates a test object having two counter orientated generator coils and a sensor or sensing coils concentrically or interleaved wound around the test object,

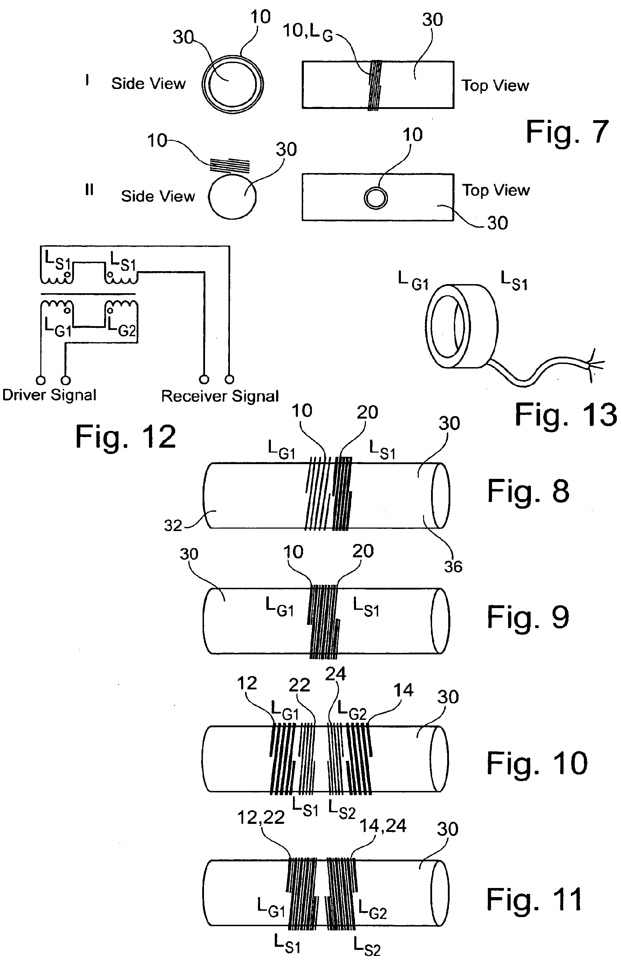

Fig. 12 illustrates a principle circuit of the design of Fig. 10,

Fig. 13 illustrates a possible design of a distributed device of Fig. 12,

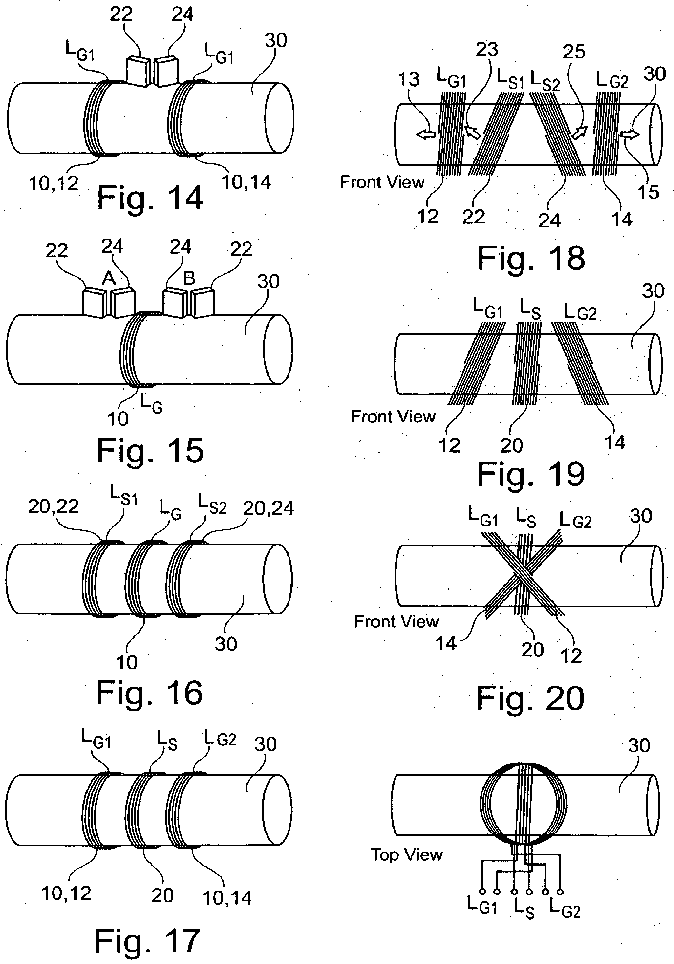

Figs. 14 to 17 illustrate examples of sensor based on the design concept I of Fig 7,

Figs. 18 to 20 illustrate sensor designs based on the concepts of Figs. 16 and 17.

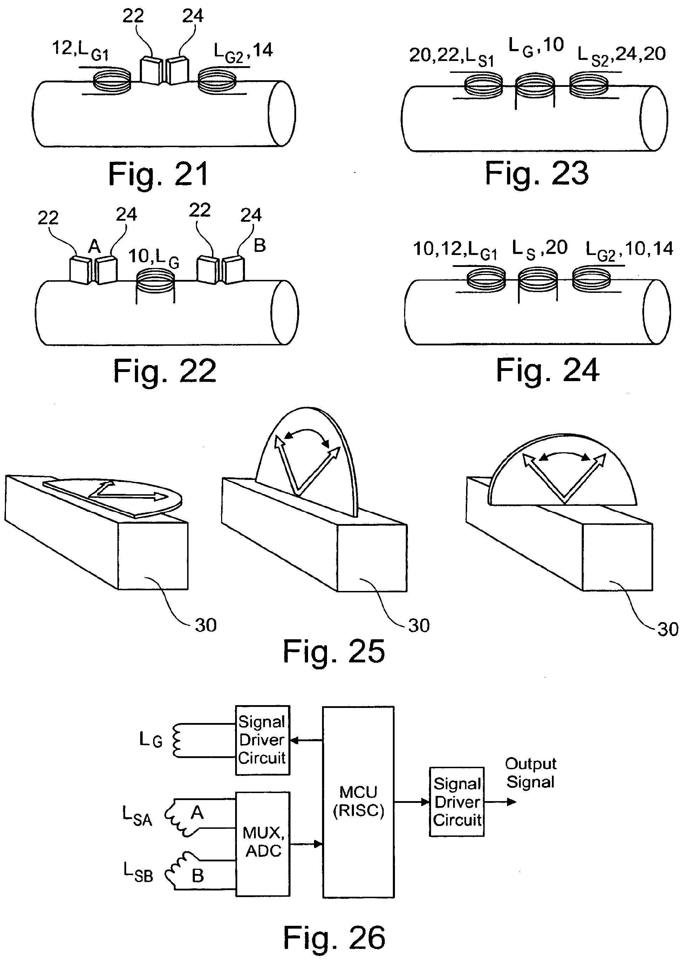

Figs. 21 to 24 illustrate examples of sensor based on the design concept 11 of Fig 7,

Fig. 25 illustrates different vector measurement sensitivity planes,

Fig. 26 illustrates an electronic circuit block diagram,

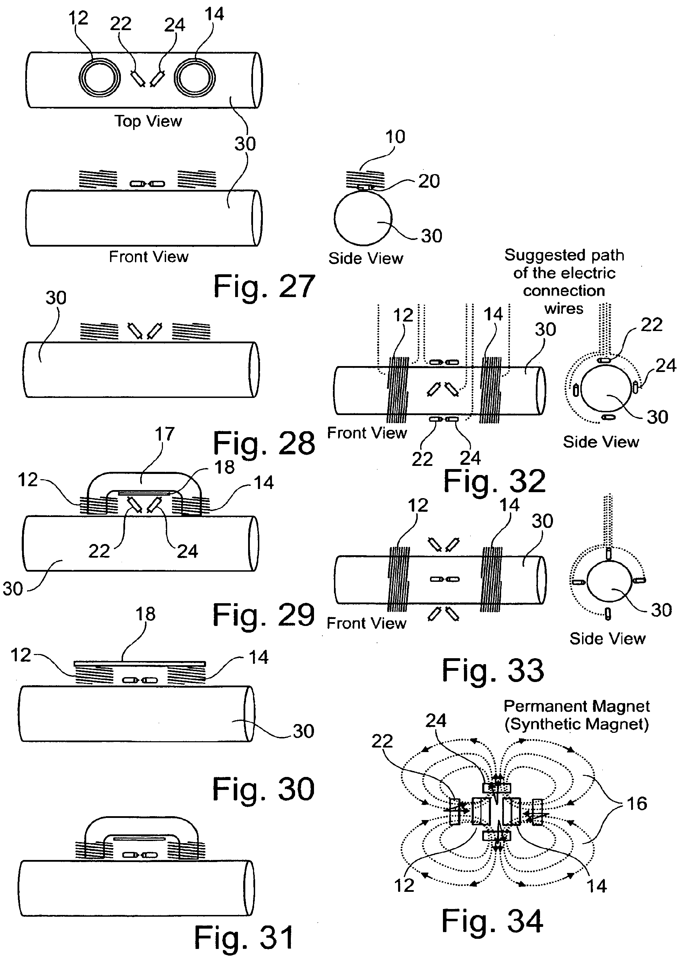

Figs. 27 to 31 illustrate different single axis magnetic field sensor coils arrangements according to the design of Fig. 14,

Figs. 32 to 33 illustrate physical sensor designs based on the sensor concept of Fig. 15.

Figs. 34 to 37 illustrate detailed mechanical force sensor designs based on the sensor concept of Fig. 22,

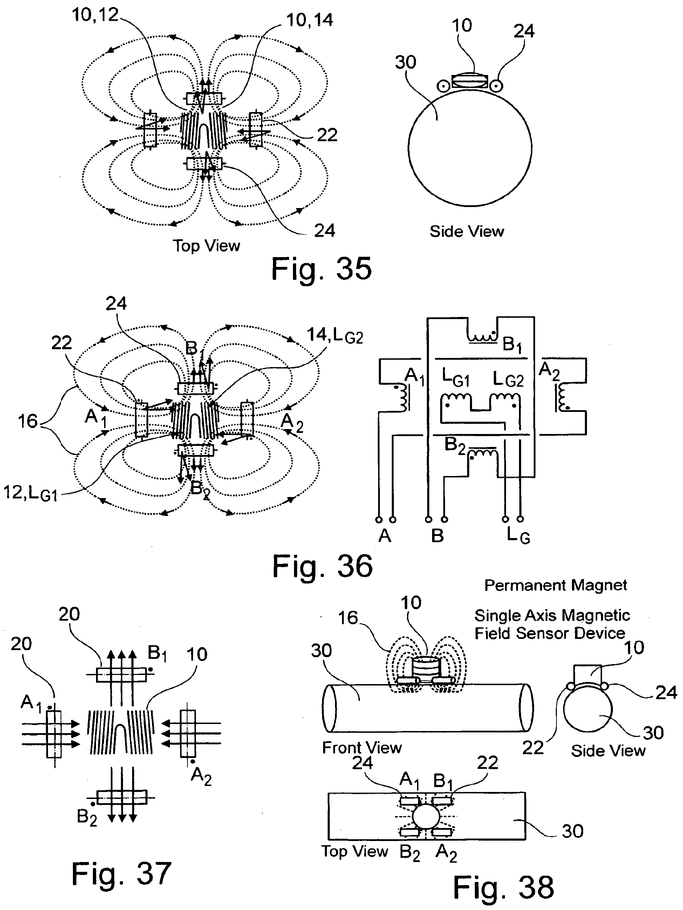

Figs. 38 to 40 illustrate a mechanical force sensor design based on the concept 11 of Fig. 7 and the design of Fig. 22,

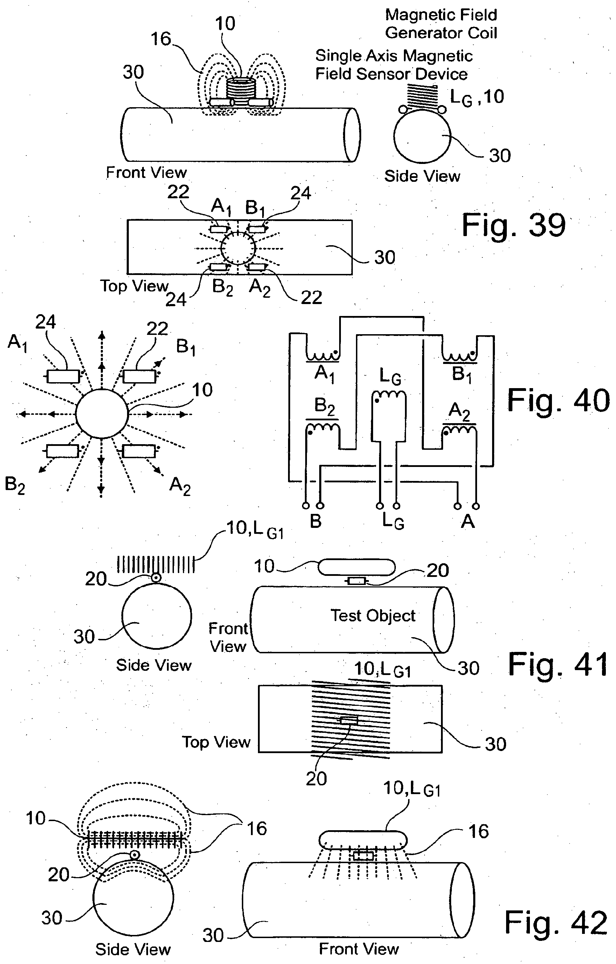

Fig. 41 illustrates three views of a flat wound generator coil and sensor coil both beside the test object,

Fig. 42 illustrates the flux lines of the arrangement of Fig. 41,

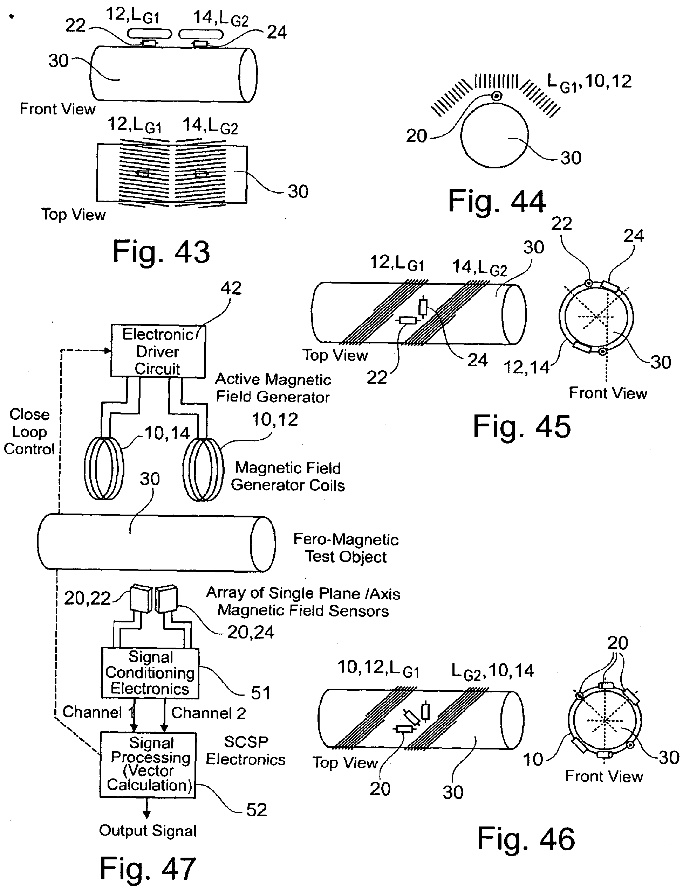

Fig. 43 illustrates a double arrangement of Fig. 41

Fig. 44 illustrates a triple section flat wound generator coil, the sections following the circumference of the test object,

Fig. 45 illustrates a double arrangement with inclined generator coils,

Fig. 46 illustrates a triple sensing coil having three different orientations, and

Fig. 47 illustrates a conceptual design of an "active" differential mode torque Sensor.

**Detailed description of exemplary embodiments of the invention**

Fig. 1 illustrates a general explanation of the invention. A magnetic flux line (MFL) that is travelling through a ferromagnetic object 30, like a power transmitting shaft, also called drive shaft, will change its path through the object in relation to the applied mechanical forces 100. The object 30 has a force input section 32 and a force output section. When having for example a bending bar, the fixed end is the force output section 36, and the free end to which the force 100 can be applied is the force input section 32. The input section 32 A magnetic flux line (MFL) is entering a ferromagnetic object at point "F" and is leaving the same object at point G while no mechanical forces are applied to the object (left of Fig. 1). When then a certain mechanical force is applied to the object (in an axis that can be detected by the magnetic flux line) the magnetic flux line (MFL) entry point F and exit line G will change in relation to each other (right of Fig. 1). The reason for this is that the path of the magnetic flux line (MFL) that is travelling through the Ferro-magnetic object is influenced by the mechanical forces and the stress applied to the grains and the magnetic domains inside the object. In this example it is assumed that a magnetic flux line (MFL) is entering a test object (here tooled from ferromagnetic material) at the point F and is exiting at the point G. Where the MFL is coming from and where it is going to is not subject of this example. When applying a mechanical force (bold shaded arrow) the MFL entry and exit points are changing ever so slightly (here shown vastly exaggerated). This allows, when being modified, measuring of torque forces, bending forces in all axes (X, Y, and Z), shear forces, load forces, centrifugal. Forces, pressure forces (e.g. when using as a pipe). The applied and used magnetic field strength may be critical to achieve the effect described above. If the applied magnetic field strength is very small (too small) then the signal-to-noise ratio may drop substantially (signal is getting weak and difficult to detect / measure). If the applied magnetic field strength is rising above a certain level then the targeted flux-path effect may be overshadowed by another magnetic physical effect and the expected flux-path changes are no longer detectable as well. So, there may a very tight window of applicable magnetic field strength where the targeted effect is present and can be measured reliably.

A test object 30 may be a device where mechanical forces 100 will be applied to. The test object can be either a symmetrically shaped shaft (like a power transmitting drive shaft) or can be a none-symmetrical shaped object, like a beam. The test object can remain static (example: a nail in the wall to measure bending or shearing forces) or can move around (example: a rotating drive shaft to measure torque forces). There are no restrictions or limitations in relation to the dimensions or the size of the test object. However, it may be very inconvenient or inefficient trying to detect and to measure relative small mechanical forces on a test object that is obviously over-dimensioned for small forces (example: trying to measure a 10 Nm bending force on a wind-turbine shaft with a 60 cm diameter may be very difficult, if not impossible to do). The Test Object can be as small as a dentist drilling shaft (1 mm to 2 mm in diameter) or can be as large as the propulsion drive shaft of an oil tanker. The here described sensing technology ca be adapted to any object size.

The present invention provides for a technology, where there is no need of magnetic pre-processing of the test object (power transmission shaft), a true non-contact sensing solution, a minimal component design with low failure rate, using a low-level magnetic field when performing the actual measurement operation, wherein low level means for example in the area of +-2 Gauss (+/-0.2 mT) approximately. One can use constant magnetic field source and alternating magnetic field source for the measurement operation. When using an alternating magnetic field source the field can either be of the same magnetic polarity or of changing magnetic polarity. When using an alternating magnetic field source this sensing technology becomes insensitive to the unwanted influences of uniform and non-uniform magnetic stary fields. It is possible to determining the measured mechanical forces by detecting the angular changes of magnetic flux lines. The principle does not measure and not relying on absolute magnetic field strength measurement and is insensitive to changes in the applied or measured magnetic field strength. Further, it is insensitive to magnet source aging effects and to assembly tolerances (spacing between sensor and test object) within a few mm. Other sensing technologies demand that the distance between the sensor itself and the test object is kept absolutely constant. Continuous measuring is possible as well as pulsed mode measuring. In the continuous measurement mode the artificially generated magnetic field may be provided at all times while in the pulsed mode the magnetic field source may be activated only for the moment when the measurement will take place.

Fig. 2 illustrates a general principle of a signal processing. The magnetic field generator unit 10, LG1 is driven by a signal generator 41, and driver circuit 42. The signal generator and driver circuit is fed by a power supply 40. The magnetic field generator unit 10, LG1 couples a magnetic field to a coupling element 30, which may for example be a tool shaft, and generates a flux within the coupling element. The flux in the coupling element generates a magnetic field, which can be detected by the magnetic field sensing unit 20, LS 1 being coupled to a signal conditioning 51 and signal processing 52 circuit. The signal conditioning and signal processing circuit 50 generates an output signal as an indicative to a force being applied to the coupling element, i.e. between e force input section and a force output section of the coupling element.

Fig. 3 illustrates a general principle of an electric circuit of the force measuring device. A primary circuit has a generator coil 10, LG, a DC supply voltage source and a resistor R1, wherein the supply voltage and the resistor may operate as a current source 40. The test object serves as the magnetic coupling element to which a force to be measured is applied. The corresponding sensing coil 20, LS is coupled to a resistor R2 in parallel, wherein the parallel sensing coil LS and resistor R2, a further resistor R3 and a capacity C 1 form a damped resonance circuit. The output signal is taken via the capacity C1, and may be an analogue output signal.

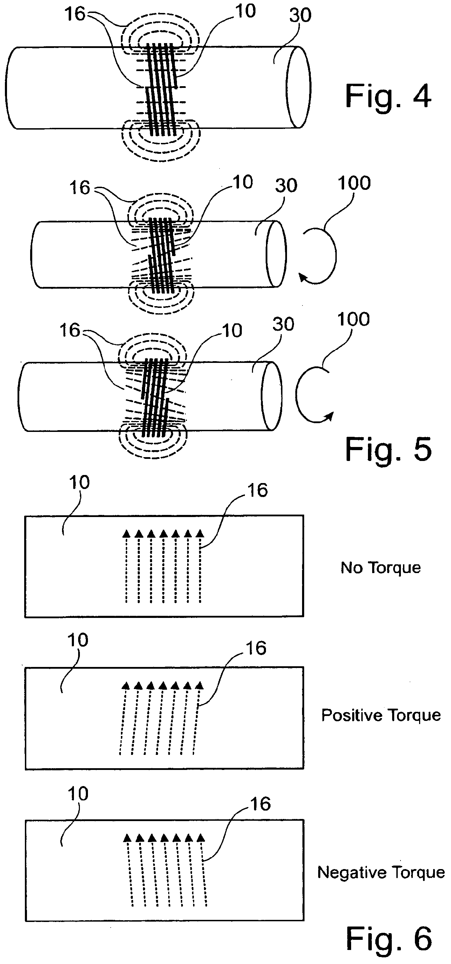

Fig. 4 illustrates a test object 30 having a electrically powered magnetic field generator coil 10 wound around, and illustrates the expected flux lines 16 in a case where no torque is applied. The flux lines are symmetrical in this embodiment.

Fig. 5 illustrates the respective test object of Fig. 4 with flux lines 16 in a case where a positive torque (top) and negative torque (bottom), respectively, is applied. The former symmetrical flux lines become unsymmetrical and change their direction. This leads to a changed flux line density, which changes flux line density may be detected. This change of density is an indicative for the applied force.

Fig. 6 illustrates magnetic flux lines 16 induced into a surface of the test object 30 depending on the torque applied in analogy to Fig. 4 (top of Fig.6) and Fig. 5 (middle and bottom of Fig. 6).

Fig. 7 illustrates two major design options. When choosing the design option of generating the source magnetic field actively then there are two major available design options. The magnetic source field can be generated by placing an inductor 10 (coil) around the test object 30 (I) or by placing it from the side of the test object (II). Option or concept I will provide larger signal amplitudes and will be more sensitive to mechanical force changes in the test object. Also, option or concept I will be less sensitive to assembly tolerances in comparison to option or concept II. Option or concept II has the major benefit that the magnetostriction sensor module can be placed from the side of the test object which allows retrofitting a sensor system in an already existing application.

Fig. 8 illustrates a test object having a single magnetic filed generating coil 10, LG1 and a single dynamic magnetic field sensor or sensing coil 20, LS 1 side by side wound around the test object 30. The winding orientation of LS1 and LG1 correspond to each other in this embodiment. The coils are wound side by side so as to have no overlap. It should be noted that the described technology will not only work from the outside of a solid shaft but also from the inside when the shaft is a hollow tube, as far as there is access from the side of the shaft to get wires inside.

Fig. 9 illustrates a similar a test object 30 having a single generator coil 10 and a single sensor or sensing coil 20, however concentrically or interleaved wound around the test object 30. The coils may fully or partially overlap and may be wound on different layers. However, the coils may also be wound in an interleaved way, i.e. the windings grasp into each other so as to form one coil body having two windings thereon.

Fig. 10 illustrates a mirrored double arrangement of Fig. 8. The test object 30 having two counter orientated generator coils 12, 14 and two counter orientated sensor or sensing coils 22, 24 side by side wound around the test object 30.

Fig. 11 illustrates a mirrored double arrangement of Fig. 9. The test object having two counter orientated generator coils 12, 14 and two counter orientated sensor or sensing coils 22, 24 concentrically or interleaved wound around the test object 30.

Fig. 12 illustrates an electrical circuit of the arrangement of fig. 10 or Fig. 11.

Fig. 13 illustrates a possible design of the arrangement of Fig. 12, for example in an integrally molded ring with respective terminals for connection to the driver and the receiver.

Figs. 14 to 17 illustrate examples of magnetostriction mechanical force sensor designed with high signal strengths (sensitive design) based on the fundamental design concept 1 of Fig. 7.

Fig. 14 illustrates a test object 30, for example a shaft, with two generator coils 12, LG1 and 14, LG2. Between the both generator coils there is provided a magnetic field sensor module 20, 22, 24. The sensor module comprises two sensor elements 22, 24. The both sensor elements are inclined to each other with respect to the axial direction of the shaft. The sensor element may be for example coils or hall sensors having a respective first and second main sensing direction being inclined to each other also with respect to the axial direction of the shaft.

Fig. 15 illustrates a test object, for example a shaft, with one generator coil 10, LG. beside both sides of the generator coil there is provided a respective magnetic field sensor module 20 in axial direction of the shaft. The sensor module 20 comprises two sensor elements 22, 24. The both sensor elements are inclined to each other with respect to the axial direction of the shaft. The sensor element may be for example coils or hall sensors having a respective first and second main sensing direction being inclined to each other also with respect to the axial direction of the shaft. Fig. 16 illustrates a test object with a sensor module having two sensor coils 22, LS1 and 24, LS2. Between the both sensor coils there is provided a magnetic field generator module 10 in form of a coil LG.

Fig. 17 illustrates a test object with two generator coils 12, LG1 and 14, LG2. Between the both generator coils there is provided a magnetic field sensor module in form of a coil LS. The sensor module comprises two sensor elements, 22, 24.

Figs. 18 to 20 illustrate sensor designs based on the concepts of Figs. 16 and 17. The main design feature is one or more coils that have been wound around a test object 30 with an angle in relation to the test object orientation.

Fig. 18 illustrates two inclined sensing elements LS1 and LS2 being positioned between two generating elements LG1, LG2. The generating element 12 has a main generation direction 13, and the generating element 14 has a main generating direction 15. Accordingly, the sensing element 22 has a first main sensing direction 23, and the second sensing element 24 has a main sensing direction 25. The inclination of the coils 22 and 24 leads to an inclined main sensing direction, i.e. the direction of the highest sensitivity.

Fig. 19 illustrates an alternative according to which two generating elements 12, LG1 and 14, LG2 are inclined in opposite directions, and between the generating elements there is located a single sensing element 20, which is not inclined.

Fig. 20 illustrates a very specific design based on the concept of Fig. 19. The main difference to the design of Fig. 19 is that the three inductors / coils are placed on-top of each other. There are several options about how to operate this specific sensor system. The signal generator coils may be driven / powered alternating (one-after-each-other), meaning that only one coil is powered at a given time whiles the other is not powered. As an alternative, the two signal generating coils may be driven simultaneously. The two signal generating coils may emit an identical signal, with the same signal amplitude and the same signal frequency. As an alternative, the two signal generator coils may emit two different signals (differing in either amplitude or frequency or both, amplitude and frequency). The coils may be driven with an alternating signal or they may be powered by a constant current. Each of the here listed design alternatives requires a specific electronic circuit in order to drive the two generator coils and to recover the actual sensor signal (mechanical force measurement value).

Figs 21 to 24 illustrate examples of how a magnetostriction mechanical force sensor module may be designed when planning a device that is not part of the transmission shaft (does not require a field generator wound around the test object), based on the fundamental design concept "II". Important: These proposals do not show potentially required flux concentrators. Figs. 21, 22, 23 and 24 correspond to Figs.14, 15, 16 and 17, with the coils being positioned beside the shaft, as it is described with respect to concept II of Fig. 7.

For a homogeneous magnetic field sensor system design, the sensor designs are based on the understanding that the Earth Magnetic Field and other uniform magnetic stray fields will not affect the measurement signals. However, if it is important to operate in a differential mode then the sensor system design needs to be modified as described below.

For a differential three coil design the magnetic field sensor unit comprises two sensor modules or elements that are placed side-by-side. A sensor module comprises two generator coils that are for example placed around the measurement object (shaft) with for example a 10 mm axial (in-line) spacing between these two coils. In the gap between the two generator coils one or more traditional MFS device are placed: axially to the shaft direction. A second senor module, with its own generator coil (one) is placed besides the first one but is operated in revered mode. The second generator coil needed is shared with the first Sensor Module, hence the title "Three Coil Design". The MFS devices of the two sensing modules are connected in reverse (differential mode operation). The MFS devices can be flux-gate coils, Hall-Effect Sensors, or any other magnetic field sensor type. For Parameter Adjustments, the following, but nit limiting operational parameters may be used: The number of wire turns for each generator coil may be from 10 to less than 50, the drive current through both generator coils (per module) may be from 10 mA to less than 100 mA, the drive current frequency may be DC (no need to go into AC as the sensor works in differential mode).

Fig. 25 illustrates an explanation about the vector measurement sensitivity planes when placing the SAMFS in the way shown in the design of Figs. 32 and 33. A larger measurement signal can be obtained when using design of Fig. 33, i.e. corresponding to the top right of Fig. 25. However, the best sensor performances are also subject of the magnetic field generator signal (either DC, Pulsed, or AC, and the generator signal strength applied). The third axis (sensitivity plane, bottom of Fig. 25) has been proven to provide very weak measurement signals. But this may change when finding the most optimal design modifications to find the sweat spot for this sensitivity plane. It can be assumed that this measurement plane bottom of Fig. 25 provides good results when keep improving the sensor design for axial load and pipe-pressure applications.

Fig. 26 illustrates an electronic circuit block diagram for one generator coil LG and two sensing coils LSA and LSB. The signals of the first magnetic field sensing element LSA and the second magnetic field sensing element LSB may be multiplexed for purposes of signal transmission to the MCU.

Figs. 27 to 31 illustrate different modifications of the design according to Fig. 14. Fig. 27 illustrates an embodiment from different view anglers, i.e. top, front and the side. All embodiments of Figs. 27, 28, 29, 30 and 31 using Single Axis Magnetic Field Sensor (SAMFS) coils. However, any other magnetic field sensor device is applicable as long as the performance specifications are similar. The difference between these designs are the variations of the arrangements of the SAMFS coils and the use of a flux concentrator and a magnetic shielding device.

Figs. 27 to 31 illustrate a shaft with two generator coils 12, 14 according to concept 11 of Fig. 7. The modifications are done with respect to the magnetic field sensor unit and a flux concentrator. The sensor unit comprises two longitudinally wound coils 22, 24, which are positioned with respect to each other in a V-form, i.e. inclined to each other.

Fig. 27 illustrates the tree views of the shaft, the generator unit and the sensor unit. In fig, 27 the V lies in the plane tangential to the surface of the shaft, i.e. flat. In Fig. 28 the V lies in a plane orthogonal to the surface of the shaft, i.e. upright. Compared to Fig. 28, Fig. 29 illustrates a flux concentrator 17 with a shielding plate 18 between the flux concentrator and the V-coils 22, 24. Fig. 30 illustrates a flat V-coil arrangement with a slim flux concentrator 17, and Fig. 31 illustrates a flat V-coil arrangement with bold flux concentrator 17 and a shielding 18 between the concentrator 17 and the V-coils 22, 24.

Figs. 32 and 33 illustrate a front view and a corresponding side view of a mechanical design of an "active" differential mode torque sensor using an array of SAMFS (Single Axis Magnetic Field Sensing) devices placed around the Test Object. The main difference between the sensor design of Fig. 32 and Fig. 33 is that the orientation of the vector-detecting SAMFS arrays. The two-axes sensing plane of the Vector detecting SAMFS array is parallel to the surface of the test object in the design of Fig. 32 and is insensitive to the axis that is perpendicular to the shaft surface. In the design of Fig. 33 the SAMFS arrays are standing-up from the shaft surface and therefore can detect and measure and magnetic flux angle changes in the axis perpendicular to the Test Object and that is "in-line" to the Test Object.

Fig. 34 illustrates two permanent magnets (or synthetic magnets) as generator elements 12, 14, which are placed opposite to each other so that the rejecting magnetic poles (like North - North, or South - South) face each other. Four Single Axis Magnetic Field Sensing (SAMFS) 22, 24 devices are placed around these two magnets in such way that the magnetic field emanating from the Synthetic magnets are passing through the SAMFS perpendicular in relation to the magnetic sensitive axis. The main directions of the magnetic fields that are emanating the Synthetic Magnets arrangement at the location of the SAMFS are shown by the black color arrows. The red arrows show the directional change of the magnetic flux lines when Torque Forces in one specific direction) are applied to a Ferro-magnetic object 30 that is placed beneath this armament. Instead of using synthetic permanent magnets, an electric powered inductor can be used. In this case two magnetic field generator coils are placed in-line and connected to each other in the reversed way, as shown in Fig. 35 to 37.

Fig. 35 illustrates a side view (left) and a top view (right) of the design of Fig. 34. wherein the permanent magnet arrangement is replaced by a coil arrangement. The mechanical design and layout of the required four magnetic field sensing devices is realized as a coil arrangement and the two magnetic field generator elements are also realized as coils. Note that the two magnetic field generator coils in this embodiment are wound around the same axis.

Fig. 36 illustrates a principle build up of an arrangement in order to eliminate the unwanted effects caused by uniform magnetic stray field (like the EMF = Earth Magnetic Field). The left side illustrates the mechanical coil arrangement, the right side illustrates the electrical connection and winding orientation of the coils. To eliminate the unwanted effects caused by uniform magnetic stray field the SAMFS devices have to be connected to each other in such way so that the unwanted signal (like the EMF) will be eliminated (will be cancelled) and the "wanted" magnetic signal will be promoted: Differential Mode Design. In the left part of the drawing above are shown the component names (nomenclature) while the right art of the drawing shows the suggested connection diagram. Special care has to be taken when tooling / producing the Magnetic Field Generator Coils. The computation of the four signals coming from the different SAMFS (here called A1, A2, B1 and B2) achieve the differential mode effect, and provide the Vector information (Absolute magnetic field strengths X and the angle alpha in which the magnetic field is pointing) as follows:

$$A = A_1 - A_2$$

$$B = B_1 - B_2$$

$$X = \sqrt{A^2 + B^2}$$

$$X = \sqrt{(A_1 - A_2)^2 + (B_1 - B_2)^2}$$

$$\alpha = \arctan(A / B)$$

The calculated value of the magnetic field angle alpha is equivalent to the applied and/or measured Torque Forces.

Fig. 37 illustrates a most critical design issue for this proposal. It is the alignment of each individual SAMFS coil in relation to the Magnetic Field Generator coil. It is important that the magnetic insensitive axis of each SAMFS is in-line with the magnetic field that is either coming from or going to the Magnetic Field Generator Coils.

Figs: 38 to 40 illustrate a mechanical force sensor design based on the concept II of Fig. 7 and the design of Fig. 22. In order to eliminate the unwanted effects caused by uniform magnetic stray field (like the EMF = Earth Magnetic Field) the SAMFS devices have to be connected to each other in such way so that the unwanted signal (like the EMF) will be eliminated (will be cancelled) and the "waited" magnetic signal will be promoted: Differential Mode Design. In the left part of the drawing above are shown the component names (nomenclature) while the right art of the drawing shows the suggested connection diagram. Special care has to be taken when tooling / producing the magnetic field generator coil.

Fig. 38 illustrates all three views demonstrating the spatial arrangement of the coils. In this embodiment a permanent magnet is used as generating element 10. Although the sensing coils 22, 24 are positioned in a geometrical plane, they are inclined with respect to surface of the core 30 or magnetic coupling element 30.

Fig. 39 illustrates a design corresponding to that of Fig. 38, however having replaced the permanent magnet by a coil.

Fig. 40 illustrates the geometrical /mechanical arrangement of the coils (left) and the electrical connection and winding orientation thereof (right).

Fig. 41 illustrates three views of a flat wound magnetic field generator coil 10, 12 LG1 and sensor coil 20, 22 both beside the test object. Fig. 42 illustrates the flux lines 16 of the arrangement of Fig. 41, where a part of the flux lines cross the test object 30 for magnetization. Fig. 43 illustrates a double arrangement of Fig. 41, wherein the generator coils LG1 and LG2 are wound in opposite directions. Fig. 44 illustrates a triple section flat wound generator coil, the sections following the circumference of the test object. Although not shown, instead of a plurality of sections, the flat wound generator coil LG1 may also be bended along the surface of the test object.

Figs. 45 and 46 illustrate a design for measuring bending forces. To avoid measuring bending forces it is necessary that the MFS-coil devices are placed at the diagonal (tilted in relation to the Test-Object orientation) running portion (like at the 12:00 o'clock and the 6:00 o'clock position (when looking from the shaft ends), as shown in Fig. 45. The sensor design of Fig. 46 is useful as a test device which is why a third MFS device is placed at a 45 degree angle between the initial two V-MFS-Coil sensor devices.

Fig. 47 illustrates a conceptual design of an "active" differential mode torque sensor. Potentially a close-loop control link between the output signal processing circuit 52 and the "active" magnetic field generator 42 (dashed line) may be implemented.

The invention may be used for very different applications. The easy to apply and low cost sensing technology allows product improvements in almost all applications where mechanical forces need to be managed (generator - load applications). As this sensing technology can be used to measure almost all mechanical forces that are transferred through, or that are applied to a Test Object the application range is extremely large. The following applications may use a non-contact mechanical force measurement system that is low in cost and can be retrofitted in already existing applications, as it is described with respect to the invention: Automotive: more than twenty different application in a standard passenger car, gearbox control, overload protection, driving comfort, reducing consumption, power steering, brake control and efficiency; Power tools: all sizes and ranges, impact and impulse fastener, safety switch at jamming, blunt drill / tool detection; Laboratory and Calibration Equipment; Motor-sport and marine; Rail-road and avionics; Consumer goods (starting which white goods and going further with healthcare and fitness equipment: bicycle e-drive control, bicycle automatic gear change; Medical equipment (like wheel chairs, live support equipment), e-drive wheel chair control; Power generation: wind power control, wave power control, gas turbines; Mining and drilling: oil drilling equipment, tunneling.

It should be pointed out that "comprising" does not exclude other elements, and "a" or "an" does not exclude a plurality of elements.

**Reference list:**

| | |
|---|---|
| 10, LG | magnetic field generating unit |
| 12, LG1 | first magnetic field generation element |
| 13 | generated magnetic field in a first direction |
| 14, LG2 | second magnetic field generation element |
| 15 | generated magnetic field in a second direction, |
| 16 | flux lines |
| 17 | flux concentrator |
| 18 | shield |
| 20, LS | magnetic field sensing unit |
| 22, LS1, LSA | first magnetic field sensing element |
| 23 | first sensing direction |
| 24, LS2, LSB | second magnetic field sensing element |
| 25 | second sensing direction |
| 30 | magnetic field coupling element |
| 32 | force input section of the magnetic field coupling element |
| 34 | material section between force and force output section |
| 36 | force output section magnetic field coupling element |
| 40 | current source |
| 41 | signal generation unit |
| 42 | drive unit |
| 50 | evaluation unit |
| 51 | signal conditioning unit |
| 52 | signal processing unit |
| 100 | input force |
| A1, A2, B1, B2 | sensing coils |
| C1 | capacitor |
| R1, R2, R3 | resistor |

**Claims**

1. Force measuring sensor comprising:

   a magnetic field generating unit (10),
   a magnetic field sensing unit (20),
   an magnetic field coupling element (30),
   wherein the magnetic field coupling element (30) is adapted to couple the magnetic field generating unit (10) and the magnetic field sensing unit (20),
   wherein the magnetic field coupling element (30) comprises a force input section (32) and a force output section (36),
   wherein the magnetic field coupling element (30) comprises a material section (34) between the force input section (32) and the force output section (36), the material section having a permeability depending on a force impact,
   wherein the magnetic field generating unit (10) is adapted to couple a magnetic field to the magnetic field coupling element (30); **characterised in that**
   the magnetic field sensing unit (20) is adapted to detect angular changes of magnetic flux lines of the magnetic field generated by the magnetic field generating unit (10);
   wherein the angular changes of the magnetic flux lines are an indicative to a force being applied to the magnetic field coupling element (30).

2. Force measuring sensor according to claim 1, wherein the magnetic field generation unit (10) comprises a first magnetic field generation element (12) and a second magnetic field generation element (14).

3. Force measuring sensor according to claim 2, wherein the first magnetic field generation element (12) is adapted to generate a magnetic field in a first direction (13) and the second magnetic field generation element (14) is adapted to generate a magnetic field in a second direction (15), wherein the first generating direction and the second generating direction are different from each other.

4. Force measuring sensor according to claim 3, wherein the first generating direction (13) and the second generating direction (15) are substantially anti parallel.

5. Force measuring sensor according to any one of claims 1 to 4, wherein the magnetic field sensing unit (20) is positioned between the first magnetic field generation element (12) and the second magnetic field generation element (14).

6. Force measuring sensor according to any one of claims 1 to 5, wherein the magnetic field sensitive unit (20) comprises a first magnetic field sensing element (22) and a second magnetic field sensing element (24).

7. Force measuring sensor according to claim 6, wherein the first magnetic field sensing element (22) has a main sensing characteristic in a first sensing direction (23), and the second magnetic field sensing element (24) has a main sensing characteristic in a second sensing direction (25), wherein the first sensing direction and the second sensing direction are different from each other.

8. Force measuring sensor according to claim 7, wherein the first sensing direction (23) and the second sensing direction (25) are substantially orthogonal to each other.

9. Force measuring sensor according to any one of claims 6 to 8, wherein the magnetic field generating unit (10) is positioned between the first magnetic field sensing element (22) and the second magnetic field sensing element (24).

10. Force measuring sensor according to any one of claims 1 to 9, wherein at least one of the magnetic field generating unit (12, 14) and/or the magnetic field sensing unit (22, 24) comprises an inductance.

11. Force measuring sensor according to claim 10, wherein the inductance is a coil wound around the magnetic field coupling element (30).

12. Force measuring sensor according to any one of claims 1 to 11, further comprising a current source (40), wherein the current source is adapted to be coupled to the magnetic field generating unit (10).

13. Force measuring sensor according to claim 12, wherein the current source (40) is a direct current source.

14. Force measuring sensor according to any one of claims 1 to 13, further comprising an evaluation unit (50), wherein the evaluation unit is adapted to be coupled to the magnetic field sensing unit (20).

15. Force measuring method, comprising:

generating a magnetic field, by a generating unit (10) such that a flux is coupled to a magnetic field coupling element (30); sensing a magnetic field generated by the flux in the magnetic field coupling element (30); applying a force to the magnetic field coupling element (30) between a force input section (32) and a force output section (36) of the magnetic field coupling element (30); **characterised by** detecting angular changes of magnetic flux lines of the magnetic field generated by the magnetic field generating unit (10), wherein the angular changes of the magnetic flux lines are an indicative to a force being applied to the magnetic field coupling element (30).

**Patentansprüche**

1. Kraftmesssensor, aufweisend eine Magnetfelderzeugungseinheit (10), eine Magnetfeldmesseinheit (20), ein Magnetfeldkopplungselement (30), wobei das Magnetfeldkopplungselement (30) ausgestaltet ist, die Magnetfelderzeugungseinheit (10) und die Magnetfeldmesseinheit (20) zu koppeln, wobei das Magnetfeldkopplungselement (30) einen Krafteingabebereich (32) und einen Kraftausgabebereich (36) aufweist, wobei das Magnetfeldkopplungselement (30) einen Materialbereich (34) zwischen dem Krafteingabebereich (32) und dem Kraftausgabebereich (36) aufweist, wobei der Materialbereich eine von einer Krafteinwirkung abhängige Permeabilität hat, wobei die Magnetfelderzeugungseinheit (10) ausgestaltet ist, ein Magnetfeld zu dem Magnetfeldkopplungselement (30) zu koppeln; **dadurch gekennzeichnet, dass** die Magnetfeldmesseinheit (20) ausgestaltet ist, Winkeländerungen von Magnetflusslinien des durch die Magnetfelderzeugungseinheit (10) erzeugten Magnetfelds zu erfassen; wobei die Winkeländerungen der Magnetflusslinien indikativ sind in Bezug auf eine auf das Magnetfeldkopplungselement (30) ausgeübte Kraft.

2. Kraftmesssensor nach Anspruch 1, wobei die Magnetfelderzeugungseinheit (10) ein erstes Magnetfelderzeugungselement (12) und ein zweites Magnetfelderzeugungselement (14) aufweist.

3. Kraftmesssensor nach Anspruch 2, wobei das erste Magnetfelderzeugungselement (12) ausgestaltet ist, ein Magnetfeld in einer ersten Richtung (13) zu erzeugen und das zweite Magnetfelderzeugungselement (14) ausgestaltet ist, ein Magnetfeld in einer zweiten Richtung (15) zu erzeugen, wobei die erste Erzeugungsrichtung und die zweite Erzeugungsrichtung unterschiedlich zueinander sind.

4. Kraftmesssensor nach Anspruch 3, wobei die erste Erzeugungsrichtung (13) und die zweite Erzeugungsrichtung (15) im Wesentlichen antiparallel sind.

5. Kraftmesssensor nach einem der Ansprüche 1 bis 4, wobei die Magnetfeldmesseinheit (20) zwischen dem ersten Magnetfelderzeugungselement (12) und dem zweiten Magnetfelderzeugungselement (14) angeordnet ist.

6. Kraftmesssensor nach einem der Ansprüche 1 bis 5, wobei die Magnetfeldmesseinheit (20) ein erstes Magnetfeldmesselement (22) und ein zweites Magnetfeldmesselement (24) aufweist.

7. Kraftmesssensor nach Anspruch 6, wobei das erste Magnetfeldmesselement (22) eine Hauptmesseigenschaft in einer ersten Messrichtung (23) hat, und das zweite Magnetfeldmesselement (24) eine Hauptmesseigenschaft in einer zweiten Messrichtung (25) hat, wobei die erste Messrichtung und die zweite Messrichtung unterschiedlich zueinander sind.

8. Kraftmesssensor nach Anspruch 7, wobei die erste Messrichtung (23) und die zweite Messrichtung (25) im Wesentlichen orthogonal zueinander sind.

9. Kraftmesssensor nach einem der Ansprüche 6 bis 8, wobei die Magnetfelderzeugungseinheit (10) zwischen dem ersten Magnetfeldmesselement (22) und dem zweiten Magnetfeldmesselement (24) angeordnet ist.

10. Kraftmesssensor nach einem der Ansprüche 1 bis 9, wobei wenigstens eine von der Magnetfelderzeugungseinheit (12, 14) und/oder der Magnetfeldmesseinheit (22, 24) eine Induktivität aufweist.

11. Kraftmesssensor nach Anspruch 10, wobei die Induktivität eine um das Magnetfeldkopplungselement (30) gewundene Spule ist.

12. Kraftmesssensor nach einem der Ansprüche 1 bis 11, des Weiteren eine Stromquelle (40) aufweisend, wobei die Stromquelle ausgestaltet ist, um mit der Magnetfelderzeugungseinheit (10) gekoppelt zu sein.

13. Kraftmesssensor nach Anspruch 12, wobei die Stromquelle (40) eine direkte Stromquelle ist.

14. Kraftmesssensor nach einem der Ansprüche 1 bis 13, des Weiteren eine Auswerteeinheit (50) aufweisend, wobei die Auswerteeinheit ausgestaltet ist, um mit der Magnetfeldmesseinheit (20) gekoppelt zu sein.

15. Kraftmessverfahren, aufweisend:

Erzeugen eines Magnetfelds durch eine Erzeugungseinheit (10), so dass ein Fluss mit einem Magnetfeldkopplungselement (30) gekoppelt ist;
Messen eines durch den Fluss erzeugten Magnetfelds in dem Magnetfeldkopplungselement (30),
Ausüben einer Kraft auf das Magnetfeldkopplungselement (30) zwischen einem Krafteingabebereich (32) und einem Kraftausgabebereich (36) des Magnetfeldkopplungselements (30); **gekennzeichnet durch** Erfassen von Winkeländerungen von Magnetflusslinien des **durch** die Magnetfelderzeugungseinheit (10) erzeugten Magnetfelds, wobei die Winkeländerungen der Magnetflusslinien indikativ sind in Bezug auf eine auf das Magnetfeldkopplungselement (30) ausgeübte Kraft.

**Revendications**

1. Capteur de mesure de force comprenant :

une unité génératrice de champ magnétique (10),
une unité détectrice de champ magnétique (20),
un élément de couplage de champ magnétique (30),
étant précisé que l'élément de couplage de champ magnétique (30) est apte à coupler l'unité génératrice de champ magnétique (10) et l'unité détectrice de champ magnétique (20),
que l'élément de couplage de champ magnétique (30) comprend une section d'entrée de force (32) et une section de sortie de force (36),
que l'élément de couplage de champ magnétique (30) comprend une section de matière (34) entre la section d'entrée de force (32) et la section de sortie de force (36), la section de matière présentant une perméabilité qui dépend d'un impact de force,
que l'unité génératrice de champ magnétique (10) est apte à coupler un champ magnétique à l'élément de couplage de champ magnétique (30) ;
**caractérisé en ce que** l'unité détectrice de champ magnétique (20) est apte à détecter des variations angulaires des lignes de flux magnétiques du champ magnétique généré par l'unité génératrice de champ magnétique (10) ;
étant précisé que les variations angulaires des lignes de flux magnétiques sont révélatrices d'une force appliquée à l'élément de couplage de champ magnétique (30).

2. Capteur de mesure de force selon la revendication 1, étant précisé que l'unité génératrice de champ magnétique (10) comprend un premier élément générateur de champ magnétique (12) et un second élément générateur de champ magnétique (14).

3. Capteur de mesure de force selon la revendication 2, étant précisé que le premier élément générateur de champ magnétique (12) est apte à générer un champ magnétique dans une première direction (13) tandis que le second élément générateur de champ magnétique (14) est apte à générer un champ magnétique dans une seconde direction (15), étant précisé que ladite première direction et ladite seconde direction sont différentes.

4. Capteur de mesure de force selon la revendication 3, étant précisé que la première direction (13) et la seconde direction (15) sont globalement antiparallèles.

5. Capteur de mesure de force selon l'une quelconque des revendications 1 à 4, étant précisé que l'unité détectrice de champ magnétique (20) est placée entre le premier élément générateur de champ magnétique (12) et le second élément générateur de champ magnétique (14).

6. Capteur de mesure de force selon l'une quelconque des revendications 1 à 5, étant précisé que l'unité détectrice de champ magnétique (20) comprend un premier élément détecteur de champ magnétique (22) et un second élément détecteur de champ magnétique (24).

7. Capteur de mesure de force selon la revendication 6, étant précisé que le premier élément détecteur de champ magnétique (22) présente une caractéristique de détection principale dans une première direction de détection (23) tandis que le second élément détecteur de champ magnétique (24) présente une caractéristique de détection principale dans une seconde direction de détection (25), étant précisé que la première direction de détection et la seconde direction de détection sont différentes.

8. Capteur de mesure de force selon la revendication 7, étant précisé que la première direction de détection (23) et la seconde direction de détection (25) sont globalement orthogonales.

9. Capteur de mesure de force selon l'une quelconque des revendications 6 à 8, étant précisé que l'unité génératrice de champ magnétique (10) est placée entre le premier élément détecteur de champ magnétique (22) et le second élément détecteur de champ magnétique (24).

10. Capteur de mesure de force selon l'une quelconque des revendications 1 à 9, étant précisé que l'une au moins, parmi l'unité génératrice de champ magnétique (12, 14) et/ou l'unité détectrice de champ magnétique (22, 24), comprend une inductance.

11. Capteur de mesure de force selon la revendication 10, étant précisé que l'inductance est une bobine enroulée autour de l'élément de couplage de champ magnétique (30).

12. Capteur de mesure de force selon l'une quelconque des revendications 1 à 11, comprenant également une source de courant (40), étant précisé que la source de courant est apte à être couplée à l'unité génératrice de champ magnétique (10).

13. Capteur de mesure de force selon la revendication 12, étant précisé que la source de courant (40) est une source de courant continu.

14. Capteur de mesure de force selon l'une quelconque des revendications 1 à 13, comprenant également une unité d'évaluation (50), étant précisé que l'unité d'évaluation est apte à être couplée à l'unité détectrice de champ magnétique (20).

15. Procédé de mesure de force, comprenant :

la production d'un champ magnétique par une unité génératrice (10) de telle sorte qu'un flux soit couplé à un élément de couplage de champ magnétique (30),
la détection d'un champ magnétique généré par le flux dans l'élément de couplage de champ magnétique (30),
l'application d'une force à l'élément de couplage de champ magnétique (30), entre une section d'entrée de force (32) et une section de sortie de force (36) dudit élément de couplage de champ magnétique (30),
**caractérisé par** la détection de variations angulaires de lignes de flux magnétiques du champ magnétique généré par l'unité génératrice de champ magnétique (10), étant précisé que les variations angulaires des lignes de flux magnétiques sont révélatrices d'une force appliquée à l'élément de couplage de champ magnétique (30).

MFL

36

34          32

F

G

30

MFL

36                    100

F                         32

G

## Fig. 1

30        20        50,51,52

10

$L_{G1}$        $L_{S1}$

Output
Signal

Power Supply

40,41,42

## Fig. 2

DC Supply
Voltage

$R_1$

$L_G$

40

10

30        $R_3$

$L_S$    $R_2$    $C_1$

20

Analogue
Output Signal

## Fig. 3

Fig. 4

Fig. 5

No Torque

Positive Torque

Negative Torque

Fig. 6

14

Fig. 7

Fig. 12

Fig. 13

Fig. 8

Fig. 9

Fig. 10

Fig. 11

Fig. 14

Fig. 15

Fig. 16

Fig. 17

Fig. 18

Fig. 19

Fig. 20

Fig. 21

Fig. 23

Fig. 22

Fig. 24

Fig. 25

Fig. 26

12 22 24 14

Top View

Front View

30

Fig. 27

10

20

30

Side View

Fig. 28

30

17 18

12 14

22 24

30

Fig. 29

18

12 14

30

Fig. 30

Fig. 31

Suggested path
of the electric
connection
wires

12 14 30

Front View

22 24

22

24

30

Side View

Fig. 32

12 14 30

Front View

30

Side View

Fig. 33

Permanent Magnet
(Synthetic Magnet)

24

22

16

12 14

Fig. 34

Top View     Side View

## Fig. 35

## Fig. 36

## Fig. 37

Permanent Magnet
Single Axis Magnetic Field Sensor Device

Front View     Side View

Top View

## Fig. 38

Magnetic Field
Generator Coil

Single Axis Magnetic
Field Sensor Device

**Fig. 39**

**Fig. 40**

**Fig. 41**

**Fig. 42**

Front View

Top View

Fig. 43

Fig. 44

Fig. 45

Fig. 46

Fig. 47

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3311818 A